# EUROPEAN PATENT APPLICATION

(11) **EP 4 787 107 A1**
(43) Date of publication of application: **05.08.2026**
(21) Application number: 26153866.4
(22) Date of filing: 23.01.2026
(51) Int. Cl.: G05D 1/249

(54) **VEHICLE CONTROL SYSTEM AND VEHICLE CONTROL METHOD**

(30) Priority: 04.02.2025 JP 2025016518
(71) Applicant: Toyota Jidosha Kabushiki Kaisha, Toyota-shi, Aichi-ken 471-8571 (JP)
(72) Inventor: IWAHORI, Kento, Toyota-shi, 471-8571 (JP); SAWANO, Takuro, Toyota-shi, 471-8571 (JP)
(74) Representative: D Young & Co LLP

(57) **Abstract**

A vehicle control system according to the present disclosure includes: a plurality of cameras arranged side by side along a longitudinal direction of a work line, the plurality of cameras being configured to capture images of a vehicle (100) traveling on the work line from above; and a controller (200) configured to control traveling of the vehicle (100) based on the images captured by the plurality of cameras (310a, 310b). In the vehicle control system, while the vehicle (100) is caused to self-propel in a predetermined direction, a worker performs work while moving, and the plurality of cameras comprise pairs of cameras (310a, 310b) arranged side by side along the longitudinal direction of the work line, each of the pairs of cameras (310a, 310b) being configured to capture images of the vehicle (100) from diagonally upward to the left and diagonally upward to the right, respectively.

## Description

### BACKGROUND

The present disclosure relates to a vehicle control system and a vehicle control method.

For example, as disclosed in Patent Literature 1, when a vehicle is manufactured, a technology in which, for example, a vehicle is not conveyed by a conveyor, but is conveyed by causing the vehicle to self-propel using autonomous control or remote control (a self-propelled conveyance technology) is known.

[Patent Literature 1] Japanese Patent No. 7424535

### SUMMARY

When a vehicle is caused to self-propel in a work line without using a belt conveyor, a plurality of cameras that capture images of the vehicle from above are disposed in the work line along the longitudinal direction of the work line. In this case, if the plurality of cameras are disposed directly above the vehicle, there is a problem that the external shape of the vehicle in the images captured by the cameras has few feature points, and hence it is difficult for a controller (i.e., a computer) to recognize the vehicle in the captured images as a vehicle, and the position of the vehicle cannot be accurately estimated.

The present disclosure has been made in view of the above-described circumstances, and provides a vehicle control system capable of more easily recognizing a vehicle traveling on a work line and more accurately estimating the position of the vehicle.

A vehicle control system according to the present disclosure includes:
a plurality of cameras arranged side by side along a longitudinal direction of a work line, the plurality of cameras being configured to capture images of a vehicle traveling on the work line from above; and
a controller configured to control traveling of the vehicle based on the images captured by the plurality of cameras, in which
while the vehicle is caused to self-propel in a predetermined direction, a worker performs work while moving, and
the plurality of cameras comprise pairs of cameras arranged side by side along the longitudinal direction of the work line, each of the pairs of cameras being configured to capture images of the vehicle from diagonally upward to the left and diagonally upward to the right, respectively.

In the vehicle control system according to the present disclosure, pairs of cameras, each of which captures images of the vehicle from diagonally upward to the left and diagonally upward to the right, respectively, are arranged side by side along the longitudinal direction of the work line. Therefore, a vehicle traveling on the work line can be more easily recognized, and the position of the vehicle can be more accurately estimated.

The controller may select an image in which the vehicle is easily recognized from among the images captured by the pair of cameras, and control the traveling of the vehicle based on the selected image. By this configuration, even when it is difficult to recognize the vehicle in one of the images captured by the pair of cameras, the other image in which the vehicle is easily recognized can be selected, and the position of the vehicle can be more accurately estimated.

The controller may select, when one of left and right doors of the vehicle is open, an image of the vehicle on a side where the door is not open as the image in which the vehicle is easily recognized. By this configuration, even when one of the right and left door of the vehicle is open, an image of the vehicle on the side where the door is not open can be selected, and the position of the vehicle can be more accurately estimated.

The controller may select, when one of the left and the right doors of vehicle is open, an image of the vehicle on a side where the door is not open from among the images captured by the pair of cameras based on a door opening signal transmitted from the vehicle, and control the traveling of the vehicle based on the selected image. By this configuration, even when one of the right and left door of the vehicle is open, an image of the vehicle on the side where the door is not open can be selected, and the position of the vehicle can be more accurately estimated.

The work line may be covered by a lighting booth which is formed in an arch shape so as to straddle the work line in a width direction thereof and extend along the work line, and the plurality of cameras are installed in the lighting booth. The vehicle control system is suitably used for the above work line.

A vehicle control method according to the present disclosure includes:
capturing images of a vehicle traveling on a work line from above by a plurality of cameras arranged side by side along a longitudinal direction of the work line; and
controlling, by a controller, traveling of the vehicle based on the images captured by the plurality of cameras, in which
while the vehicle is caused to self-propel in a predetermined direction in the work line, a worker performs work while moving, and
the plurality of cameras comprise pairs of cameras arranged side by side along the longitudinal direction of the work line, each of the pairs of cameras being configured to capture images of the vehicle from diagonally upward to the left and diagonally upward to the right, respectively.

In the vehicle control method according to the present disclosure, pairs of cameras, each of which captures images of the vehicle from diagonally upward to the left and diagonally upward to the right, respectively, are arranged side by side along the longitudinal direction of the work line. Therefore, a vehicle traveling on the work line can be more easily recognized, and the position of the vehicle can be more accurately estimated.

The controller may select an image in which the vehicle is easily recognized from among the images captured by the pair of cameras, and control the traveling of the vehicle based on the selected image. By this configuration, even when it is difficult to recognize the vehicle in one of the images captured by the pair of cameras, the other image in which the vehicle is easily recognized can be selected, and the position of the vehicle can be more accurately estimated.

The controller may select, when one of left and right doors of the vehicle is open, an image of the vehicle on a side where the door is not open as the image in which the vehicle is easily recognized. By this configuration, even when one of the right and left door of the vehicle is open, an image of the vehicle on the side where the door is not open can be selected, and the position of the vehicle can be more accurately estimated.

The controller may select, when one of the left and the right doors of vehicle is open, an image of the vehicle on a side where the door is not open from among the images captured by the pair of cameras based on a door opening signal transmitted from the vehicle, and control the traveling of the vehicle based on the selected image. By this configuration, even when one of the right and left door of the vehicle is open, an image of the vehicle on the side where the door is not open can be selected, and the position of the vehicle can be more accurately estimated.

The work line may be covered by a lighting booth which is formed in an arch shape so as to straddle the work line in a width direction thereof and extend along the work line, and the plurality of cameras are installed in the lighting booth. The vehicle control method is suitably used for the above work line.

According to the present disclosure, it is possible to provide a vehicle control system capable of more easily recognizing a vehicle traveling on a work line and more accurately estimating the position of the vehicle.

The above and other objects, features and advantages of the present disclosure will become more fully understood from the detailed description given hereinbelow and the accompanying drawings.

### BRIEF DESCRIPTION OF DRAWINGS

Fig. 1 is a block diagram showing a control system of a vehicle control system according to a first embodiment;
Fig. 2 is a front view schematically showing a work line where a vehicle self-propels;
Fig. 3 is a side view schematically showing the work line where a vehicle self-propels;
Fig. 4 is a diagram for explaining a traveling control of a vehicle;
Fig. 5 is a control block diagram for explaining a traveling control example 1;
Fig. 6 is a flowchart for explaining the traveling control example 1;
Fig. 7 is a control block diagram for explaining a traveling control example 2; and
Fig. 8 is a flowchart for explaining the traveling control example 2.

### DESCRIPTION OF EMBODIMENTS

Specific embodiments to which the present disclosure is applied will be described hereinafter in detail with reference to the drawings. However, the present disclosure is not limited to the following embodiments. Further, for the clarification of the description, the following descriptions and the drawings are simplified as appropriate.

### (First Embodiment)

### <Overview of Vehicle Control System>

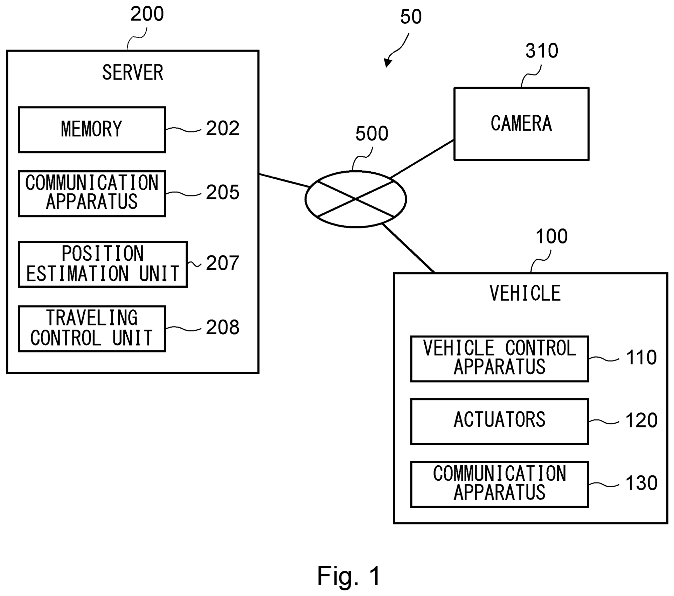

First, an overview of a vehicle control system according to a first embodiment will be described with reference to Fig. 1. Fig. 1 is a block diagram showing a control system of the vehicle control system according to the first embodiment. As shown in Fig. 1, a vehicle control system (also referred to simply as a system) 50 includes a server 200 and cameras 310, and controls traveling of a vehicle 100.

The vehicle control system 50 is applied, for example, to the control of the vehicle 100 self-propelling on a work line in a vehicle manufacturing factory where the vehicle 100 is manufactured. Therefore, the vehicle 100 to be controlled is a self-propelled vehicle capable of self-propelling during a manufacturing process. In other words, the vehicle 100 is a vehicle which can move by unmanned driving during a manufacturing process.

As shown in Fig. 1, the server 200 includes a memory 202, a communication apparatus 205, a position estimation unit 207, and a traveling control unit 208. The vehicle 100 includes a vehicle control apparatus 110, actuators 120, and a communication apparatus 130.

Note that the server 200 may be composed of not only a physically single apparatus but also a plurality of distributed apparatuses.

The server 200 has a function as a controller which estimates the position of the vehicle 100 based on captured images of the vehicle 100 received from the cameras 310 and controls traveling of the vehicle 100 to be controlled.

In the server 200, the communication apparatus 205 communicates with the cameras 310 and the vehicle 100 via a network 500. The communication apparatus 205, for example, receives data such as captured images from the cameras 310, and transmits information (vehicle control information) for controlling the traveling of the vehicle 100 generated based on the image to the vehicle 100.

The position estimation unit 207 recognizes the vehicle 100 and estimates the position of the vehicle 100 based on the images of the vehicle 100 captured by the cameras 310. Specifically, the communication apparatus 205 receives data such as captured images from the cameras 310, and the position estimation unit 207 estimates the position of the vehicle 100 by analyzing the received captured images (i.e., image analysis).

The traveling control unit 208 generates information (vehicle control information) for controlling the traveling of the vehicle 100 based on the position of the vehicle 100 estimated by the position estimation unit 207.

The vehicle control information generated by the traveling control unit 208 is transmitted to the vehicle 100 via the communication apparatus 205. In the vehicle 100, the communication apparatus 130 receives the vehicle control information transmitted from the server 200, and the vehicle control apparatus 110 operates the actuators 120 based on the received vehicle control information, to thereby drive the vehicle 100.

The camera 310 is one form of an external sensor 300 described later, and captures an image of the vehicle 100 traveling on a work line from above. The camera 310 has a communication function, and data such as an image captured by the camera 310 is transmitted to the server 200 via the network 500.

### <Details of a work line to which the vehicle control system is applied>

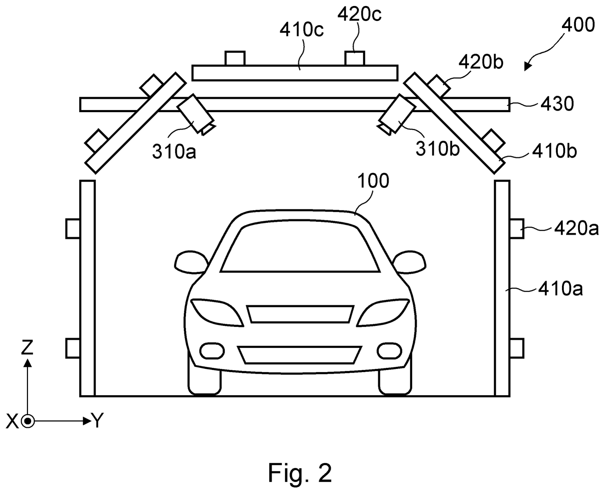

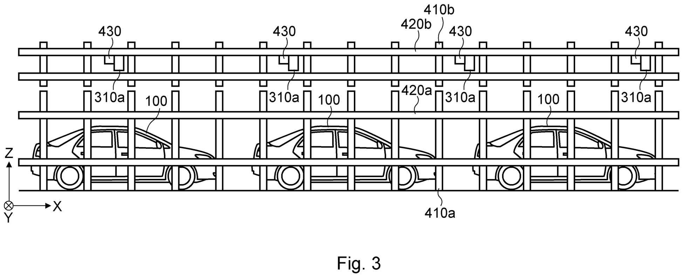

Next, details of a work line to which the vehicle control system according to this embodiment is applied will be described with reference to Figs. 2 and 3. Fig. 2 is a front view schematically showing the work line where a vehicle self-propels. Fig. 3 is a side view schematically showing the work line where a vehicle self-propels.

Note that right-handed XYZ orthogonal coordinates shown in Figs. 2 and 3 are shown only for the sake of convenience to explain positional relations among the components. In Fig. 2 etc., for example, the Z-axis positive direction is a vertically upward direction, and the XY plane is a horizontal plane, which direction and plane are the same throughout the drawings.

As shown in Figs. 2 and 3, the work line extends in the X-axis direction, and the vehicle 100 to be controlled by the vehicle control system self-propels on the work line in the X-axis positive direction. In the work line, a worker (not shown) performs work while moving together with the vehicle 100 which is self-propelling. The work includes, for example, inspection and assembly. Note that the work line shown in each of Figs. 2 and 3 is covered by a lighting booth 400 which is formed in an arch shape so as to straddle the work line in the width direction thereof (the Y-axis direction) and extends in the X-axis direction along the work line.

As shown in Fig. 2, the lighting booth 400 includes rod-shaped lighting fixtures 410a, 410b, and 410c. The lighting fixtures 410a, 410b, and 410c are, for example, Light Emitting Diodes (LEDs) or fluorescent lamps. However, they are not limited to particular fixtures.

Note that the lighting booth 400 is not essential.

In the example shown in Fig. 2, a pair of the lighting fixtures 410a extending in the Z-axis direction is disposed so as to face each other on the respective sides of the work line in the width direction thereof across the vehicle 100. Further, the lighting fixture 410c extending in the Y-axis direction is disposed above the work line, that is, the vehicle 100. Further, a pair of the lighting fixtures 410b is provided so as to obliquely extend between the respective upper ends of the pair of the lighting fixtures 410a and respective ends of the lighting fixture 410c.

That is, the pair of the lighting fixtures 410a, the pair of the lighting fixtures 410b, and the lighting fixture 410c are provided in an arch shape so as to straddle the work line in the width direction thereof (the Y-axis direction) as a whole.

Further, as shown in Fig. 3, the lighting fixtures 410a, 410b, and 410c provided in an arch shape are arranged side by side along the work line in the X-axis direction.

Further, as shown in Figs. 2 and 3, the lighting booth 400 includes beams 420a, 420b, and 420c extending in the X-axis direction and beams 430 extending in the Y-axis direction. The beams 420a connect the lighting fixtures 410a which are arranged side by side along the work line in the X-axis direction to each other and support them. The beams 420b connect the lighting fixtures 410b which are arranged side by side along the work line in the X-axis direction to each other and support them. The beams 420c connect the lighting fixtures 410c which are arranged side by side along the work line in the X-axis direction to each other and support them.

Note that although the number of each of the beams 420a, 420b, and 420c shown in Figs. 2 and 3 is two, it is not limited thereto. Further, the beams 420a, 420b, and 420c are not essential.

As shown in Fig. 2, the beam 430 extending in the Y-axis direction supports a pair of cameras 310a and 310b. Further, as shown in Fig. 3, the beam 430 is supported by the beam 420b between the lighting fixtures 410b arranged side by side in the X-axis direction.

Note that the lighting booth 400 shown in Figs. 2 and 3 is merely an example, and there may be many other variations thereof.

As shown in Fig. 2, the pair of cameras 310a and 310b captures images of the vehicle 100 from diagonally upward to the left and diagonally upward to the right. Further, as shown in Fig. 3, the pairs of cameras 310a and 310b are arranged side by side along the longitudinal direction of the work line (the X-axis direction). The cameras 310 shown in Fig. 1 include the pair of cameras 310a and 310b shown in Figs. 2 and 3.

Note that the pair of cameras 310a and 310b does not need to be particularly supported by the beam 420b as long as they are installed in the lighting booth 400 and can capture images of the vehicle 100 from diagonally upward to the left and diagonally upward to the right. That is, there may be many other variations as to how the pair of cameras 310a and 310b is installed.

Note that if the cameras are disposed directly above the vehicle 100 in the work line, the external shape of the vehicle 100 in the images captured by the cameras has few feature points, and hence it is difficult for the position estimation unit 207 shown in Fig. 1 to recognize the vehicle 100 in the captured images as a vehicle. In particular, as shown in Figs. 2 and 3, when the work line is covered by the lighting booth 400, images of the entire vehicle 100 cannot be captured by the cameras since the cameras are installed close to the vehicle 100. Therefore, it becomes more difficult for the position estimation unit 207 to recognize the vehicle 100 in the captured images as a vehicle.

Meanwhile, in the vehicle control system according to this embodiment, the pair of cameras 310a and 310b captures images of the vehicle 100 from diagonally upward to the left and diagonally upward to the right. Therefore, the external shape of the vehicle 100 in the images captured by the cameras 310a and 310b has many feature points, and hence the position estimation unit 207 can easily recognize the vehicle 100 in the captured images as vehicle. As a result, the position estimation unit 207 can more accurately estimate the position of the vehicle 100.

Further, on the work line, a worker may open one of the left and the right doors of the vehicle 100. In this case, among images of the vehicle 100 captured by the pair of cameras 310a and 310b, it is more difficult for the position estimation unit 207 to recognize the vehicle 100 in the image captured on the side where the door is open as a vehicle than the vehicle 100 in the image captured on the side where the door is closed.

Therefore, the position estimation unit 207 may select an image in which the vehicle 100 is easily recognized from among the images captured by the pair of cameras 310a and 310b, and control the traveling of the vehicle 100 based on the selected image. As a result, the position estimation unit 207 can more accurately estimate the position of the vehicle 100.

Similarly, in some cases, a worker works beside the vehicle 100 on the work line. In this case, among images of the vehicle 100 captured by the pair of cameras 310a and 310b, it may be more difficult for the position estimation unit 207 to recognize the vehicle 100 in the image captured on the side where the worker is working as a vehicle than the vehicle 100 in the image captured on the side where the worker is not working.

In this case, the position estimation unit 207 may select an image in which the vehicle 100 is easily recognized from among the images captured by the pair of cameras 310a and 310b, and control the traveling of the vehicle 100 based on the selected image. As a result, the position estimation unit 207 can more accurately estimate the position of the vehicle 100.

As described above, the position estimation unit 207 may select an image in which the vehicle 100 is easily recognized from among the images captured by the pair of cameras 310a and 310b, and control the traveling of the vehicle 100 based on the selected image.

Note that, when one of the left and the right doors of the vehicle 100 is open, the position estimation unit 207 may select an image of the vehicle 100 on the side where the door is not open from among the images captured by the pair of cameras 310a and 310b based on a door opening signal transmitted from the vehicle 100. By the above configuration, the position estimation unit 207 can select an image of the vehicle 100 on the side where the door is not open without determining which of the images captured by the pair of cameras 310a and 310b includes the vehicle 100 that is easily recognized. Further, since the opening of the door can be detected by a sensor provided as standard equipment in the vehicle, it is not necessary to provide an additional sensor.

As described above, in the vehicle control system 50 according to this embodiment, the pairs of cameras 310a and 310b, each of which captures images of the vehicle 100 from diagonally upward to the left and diagonally upward to the right, respectively, are arranged side by side along the longitudinal direction of the work line. Therefore, in the vehicle control system 50 according to this embodiment, the vehicle 100 traveling on the work line can be more easily recognized, and the position of the vehicle 100 can be more accurately estimated.

Further, in the vehicle control system 50 according to this embodiment, the controller (e.g., the server 200) may select an image in which the vehicle 100 is easily recognized from among the images captured by the pair of cameras 310a and 310b, and control the traveling of the vehicle 100 based on the selected image. For example, when one of the left and the right doors of the vehicle 100 is open, the image of the vehicle 100 on the side where the door is not open is selected. By this configuration, even when it is difficult to recognize the vehicle 100 in one of the images captured by the pair of cameras 310a and 310b, the other image in which the vehicle 100 is easily recognized can be selected, and the position of the vehicle 100 can be more accurately estimated.

Traveling control examples for controlling traveling of the vehicle 100 in the system 50 will be described below.

### <A. Traveling Control Example 1>

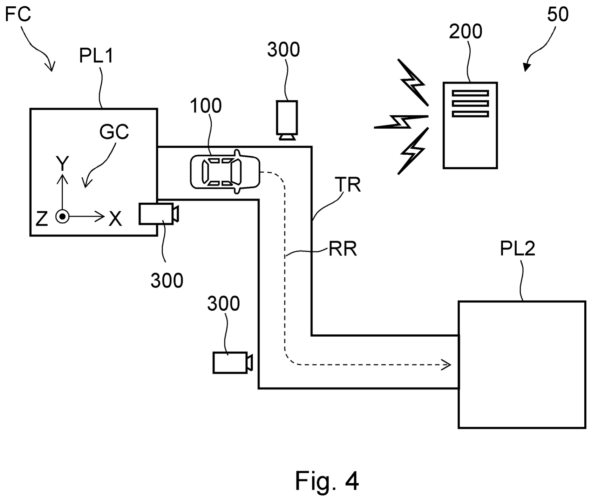

Fig. 4 is a conceptual diagram showing a configuration of the system 50 according to a traveling control example 1. The system 50 includes one or more of the vehicles 100 as a mobile body (bodies), the server 200, and one or more of the external sensors 300.

Note that, when the mobile body is other than a vehicle, the term "vehicle" or "car" in the present disclosure may be replaced by a "mobile body" as appropriate, and the term "travel" may be replaced by "move" as appropriate.

The vehicle 100 is configured to be able to travel by unmanned driving. The "unmanned driving" means driving that is not dependent on a driver's traveling operation. The traveling operation means an operation regarding at least one of "running", "turning", and "stopping" of the vehicle 100. The unmanned driving is achieved by automatic or manual remote control that uses an apparatus located outside the vehicle 100, or by autonomous control of the vehicle 100.

Any passenger who does not perform the traveling operation may ride in the vehicle 100 traveling by unmanned driving. Examples of the passenger who does not perform the traveling operation include a person who is just sitting on a seat of the vehicle 100 and a person who is performing work different from the traveling operation, such as assembly, inspection, or an operation of switches, while riding in the vehicle 100. Note that the driving by the traveling operation of the passenger may be referred to as "manned driving".

In this specification, the "remote control" includes "full remote control" in which all the operations of the vehicle 100 are completely determined from the outside of the vehicle 100 and "partial remote control" in which some of the operations of the vehicle 100 are determined from the outside of the vehicle 100. Further, "autonomous control" includes "full autonomous control" in which the vehicle 100 autonomously controls its own operation without receiving any piece of information from an apparatus located outside the vehicle 100 and "partial autonomous control" in which the vehicle 100 autonomously controls its own operation using information received from an apparatus located outside the vehicle 100.

In this embodiment, the system 50 is used in a factory FC which manufactures the vehicles 100. The reference coordinate system of the factory FC is a global coordinate system GC. That is, a desired position in the factory FC is expressed by coordinates of X, Y, and Z in the global coordinate system GC. The factory FC includes a first place PL1 and a second place PL2. The first place PL1 and the second place PL2 are connected to each other by a traveling path TR along which the vehicle 100 can travel. A plurality of the external sensors 300 are installed along the traveling path TR in the factory FC. The positions of the respective external sensors 300 in the factory FC are adjusted in advance. The vehicle 100 moves from the first place PL1 to the second place PL2 along the traveling path TR by unmanned driving.

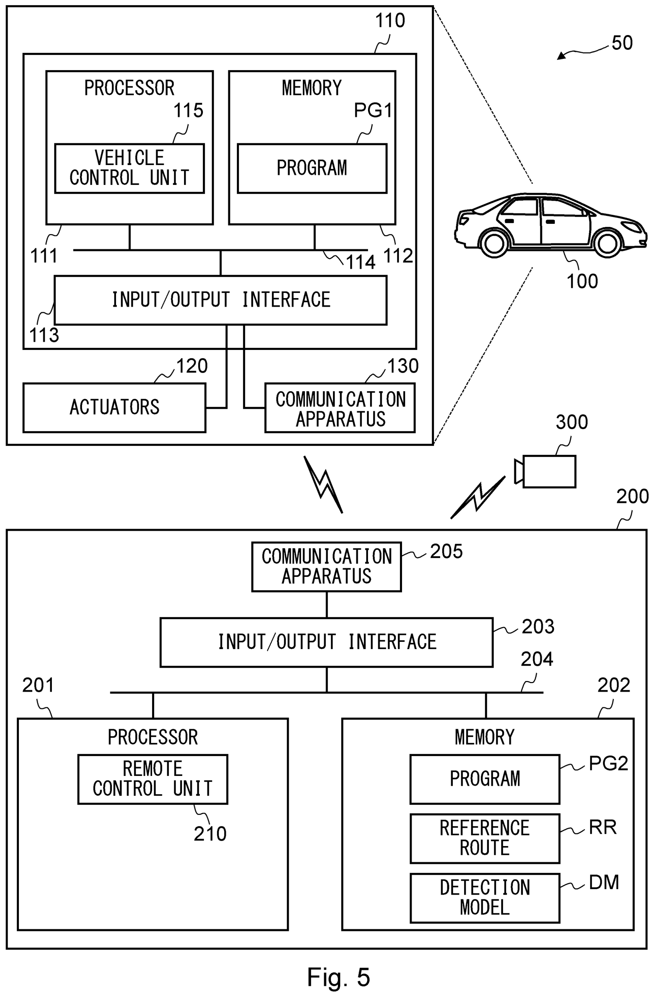

Fig. 5 is a block diagram showing the configuration of the system 50. The vehicle 100 includes the vehicle control apparatus 110 for controlling each part of the vehicle 100, the actuators 120 including one or more actuators that drive under a control of the vehicle control apparatus 110, and the communication apparatus 130 for communicating with an external apparatus such as the server 200 by wireless communication. The actuators 120 include an actuator of a driving apparatus for accelerating the vehicle 100, an actuator of a steering apparatus for changing a traveling direction of the vehicle 100, and an actuator of a control apparatus for decelerating the vehicle 100.

The vehicle control apparatus 110 is composed of a computer including a processor 111, a memory 112, an input/output interface 113, and an internal bus 114. The processor 111, the memory 112, and the input/output interface 113 are connected to one another via the internal bus 114 in such a way that they can communicate with one another. The actuators 120 and the communication apparatus 130 are connected to the input/output interface 113. The processor 111 executes a program PG1 stored in the memory 112, thereby implementing various functions including a function as a vehicle control unit 115.

The vehicle control unit 115 causes the vehicle 100 to travel by controlling the actuators 120. The vehicle control unit 115 is able to cause the vehicle 100 to travel by controlling the actuators 120 using a traveling control signal received from the server 200. The traveling control signal is a control signal for causing the vehicle 100 to travel. In this embodiment, the traveling control signal includes an acceleration and a steering angle of the vehicle 100 as parameters. In another embodiment, the traveling control signal may include, in place of or in addition to the acceleration of the vehicle 100, a speed of the vehicle 100 as a parameter.

The server 200 is composed of a computer including a processor 201, the memory 202, an input/output interface 203, and an internal bus 204. The processor 201, the memory 202, and the input/output interface 203 are connected to one another via the internal bus 204 in such a way that they can communicate with one another. The communication apparatus 205 for communicating with various types of apparatuses located outside the server 200 is connected to the input/output interface 203. The communication apparatus 205 can communicate with the vehicle 100 by wireless communication and can communicate with each of the external sensors 300 by wired communication or wireless communication. The processor 201 executes a program PG2 stored in the memory 202, thereby implementing various functions including a function as a remote control unit 210.

The remote control unit 210 acquires results of detection by the sensors, generates a traveling control signal for controlling the actuators 120 of the vehicle 100 using the results of the detection, and transmits the generated traveling control signal to the vehicle 100, thereby causing the vehicle 100 to travel by remote control. That is, the remote control unit 210 includes the functions of the position estimation unit 207 and the traveling control unit 208 shown in Fig. 1.

Further, the remote control unit 210 may generate not only the traveling control signal but also, for example, control signals for controlling actuators for operating various types of auxiliary devices provided in the vehicle 100 or various types of equipment such as windshield wipers, power windows, or lamps. That is, the remote control unit 210 may operate these various types of equipment or various types of auxiliary devices by remote control.

The external sensor 300 is a sensor located outside the vehicle 100. The external sensor 300 according to this embodiment is a sensor that captures the vehicle 100 from the outside of the vehicle 100. The external sensor 300 includes a communication apparatus (not shown) and can communicate with other apparatuses such as the server 200 by wired communication or wireless communication.

Specifically, the external sensor 300 is composed of a camera. The camera as the external sensor 300 captures an image including the vehicle 100, and outputs the captured image as a result of detection.

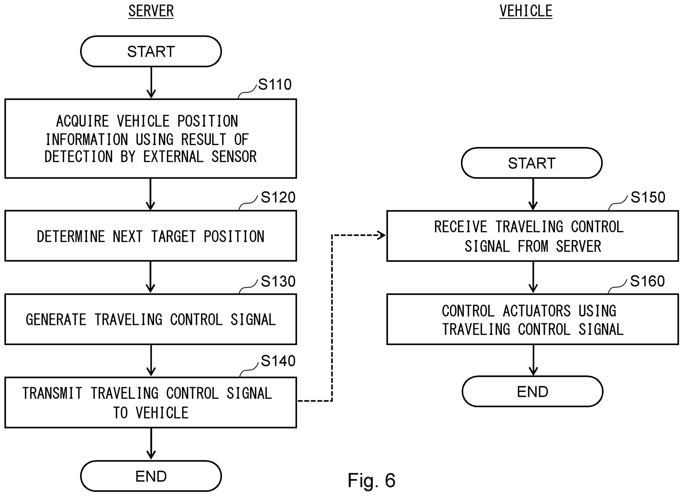

Fig. 6 is a flowchart showing a processing procedure of traveling control of the vehicle 100 according to the traveling control example. In the processing procedure shown in Fig. 6, the processor 201 of the server 200 functions as the remote control unit 210 by executing the program PG2. Further, the processor 111 of the vehicle 100 functions as the vehicle control unit 115 by executing the program PG1.

In Step S110, the processor 201 of the server 200 acquires vehicle position information of the vehicle 100 using a result of detection output from the external sensor 300. The vehicle position information is position information based on which a traveling control signal is generated. In this embodiment, the vehicle position information includes the position and the orientation of the vehicle 100 in the global coordinate system GC of the factory FC. Specifically, in Step S110, the processor 201 acquires the vehicle position information using the captured image acquired from the camera, which is the external sensor 300.

Specifically, in Step S110, the processor 201 (the position estimation unit 207 shown in Fig. 1 as a function block) detects, for example, the external shape of the vehicle 100 from the captured image, calculates a coordinate system of the captured image, that is, coordinates of positioning points of the vehicle 100 in a local coordinate system, and converts the calculated coordinates into coordinates in the global coordinate system GC, thereby acquiring the position of the vehicle 100.

The external shape of the vehicle 100 included in the captured image can be detected, for example, by inputting the captured image to a detection model DM that uses artificial intelligence. The detection model DM is prepared, for example, in the system 50 or in the outside of the system 50 and is stored in the memory 202 of the server 200 in advance. Examples of the detection model DM include a trained machine learning model that has been trained so as to implement one of semantic segmentation and instance segmentation. For example, convolutional neural network (hereinafter referred to as CNN) trained by supervised learning using a learning data set may be used as this machine learning model.

The learning data set includes, for example, a plurality of training images including the vehicle 100, and a label indicating whether each area in the training image is an area indicating the vehicle 100 or an area indicating something other than the vehicle 100. When CNN learning is performed, parameters of the CNN are preferably updated in such a way that the error between the result output by the detection model DM and the label is reduced by backpropagation. Further, the processor 201 is able to acquire the orientation of the vehicle 100 by estimating it based on the direction of the moving vector of the vehicle 100 calculated from changes in positions of feature points of the vehicle 100 between frames of the captured image using an optical flow method.

In Step S120, the processor 201 of the server 200 determines a target position to which the vehicle 100 should go next. In this embodiment, the target position is expressed by coordinates of X, Y, and Z in the global coordinate system GC. The memory 202 of the server 200 stores in advance a reference route RR, which is a route along which the vehicle 100 should travel. The route is expressed by a node indicating a departure place, nodes indicating passage points, a node indicating a destination, and links connecting the respective nodes. The processor 201 determines the target position to which the vehicle 100 should go next using the vehicle position information and the reference route RR. The processor 201 determines a position ahead of the current position of the vehicle 100 on the reference route RR as the target position.

In Step S130, the processor 201 of the server 200 generates a traveling control signal for causing the vehicle 100 to travel toward the determined target position. The processor 201 calculates a traveling speed of the vehicle 100 from the transition of the positions of the vehicle 100 and compares the calculated traveling speed with a target speed. In general, when the traveling speed is lower than the target speed, the processor 201 determines the acceleration in such a way that the vehicle 100 accelerates, while when the traveling speed is higher than the target speed, the processor 201 determines the acceleration in such a way that the vehicle 100 decelerates. Further, when the vehicle 100 is positioned on the reference route RR, the processor 201 determines the steering angle and the acceleration in such a way that the vehicle 100 is prevented from being deviated from the reference route RR, while when the vehicle 100 is not positioned on the reference route RR, that is, when the vehicle 100 is deviated from the reference route RR, the processor 201 determines the steering angle and the acceleration in such a way that the vehicle 100 returns onto the reference route RR.

In Step S140, the processor 201 of the server 200 transmits a generated traveling control signal to the vehicle 100. The processor 201 repeats, in a predetermined cycle, acquisition of the position of the vehicle 100, determination of the target position, generation of a traveling control signal, transmission of the traveling control signal, and the like.

In Step S150, the processor 111 of the vehicle 100 receives the traveling control signal transmitted from the server 200. In Step S160, the processor 111 of the vehicle 100 controls the actuators 120 using the received traveling control signal, thereby causing the vehicle 100 to travel at the acceleration and the steering angle indicated in the traveling control signal. The processor 111 repeats reception of the traveling control signal and control of the actuators 120 in a predetermined cycle. By the system 50 according to this example, it is possible to cause the vehicle 100 to travel by remote control and thus to move the vehicle 100 without using conveyance equipment such as cranes or conveyors.

### <B: Traveling Control Example 2>

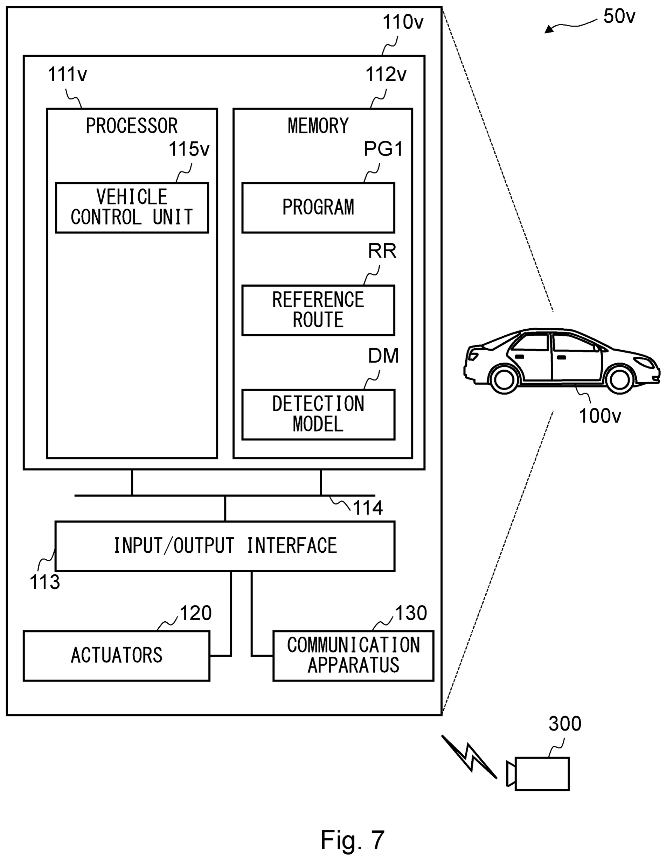

Fig. 7 is an explanatory diagram showing a schematic configuration of a system 50v according to a traveling control example 2. In this example, the system 50v is different from the system 50 according to the traveling control example 1 in that the system 50v does not include the server 200. Further, a vehicle 100v has a configuration in which it can travel under its autonomous control. The other configurations are the same as those stated above unless otherwise specified.

In this example, a processor 111v of a vehicle control apparatus 110v functions as a vehicle control unit 115v by executing the program PG1 stored in a memory 112v. The vehicle control unit 115v acquires a result output by a sensor, generates a traveling control signal using the output result, and outputs the generated traveling control signal to operate the actuators 120, thereby enabling the vehicle 100v to travel by autonomous control. In this example, the memory 112v stores in advance the detection model DM and the reference route RR in addition to the program PG1.

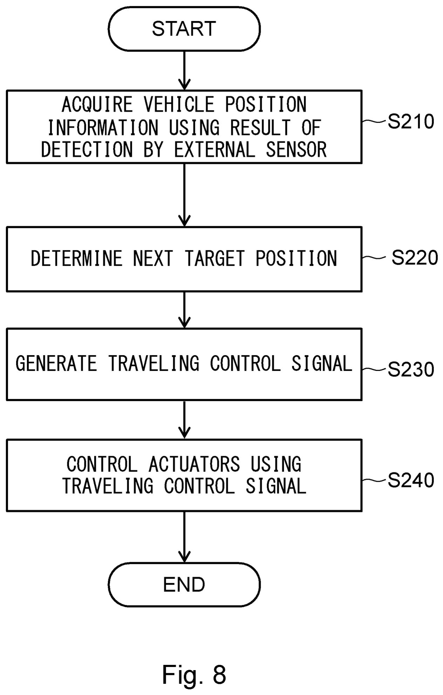

Fig. 8 is a flowchart showing a processing procedure of traveling control of the vehicle 100v according to the traveling control example 2. In the processing procedure shown in Fig. 8, the processor 111v of the vehicle 100v functions as the vehicle control unit 115v by executing the program PG1.

In Step S210, the processor 111v of the vehicle control apparatus 110v acquires vehicle position information using a result of detection output from a camera, which is the external sensor 300.

In Step S220, the processor 111v determines a target position to which the vehicle 100v should go next.

In Step S230, the processor 111v generates a traveling control signal for causing the vehicle 100v to travel toward the determined target position.

In Step S240, the processor 111v controls the actuators 120 using the generated traveling control signal, thereby causing the vehicle 100v to travel in accordance with parameters indicated in the traveling control signal.

The processor 111v repeats acquisition of the vehicle position information, determination of the target position, generation of a traveling control signal, and control of the actuators in a predetermined cycle. By the system 50v according to this example, it is possible to cause the vehicle 100v to travel by autonomous control of the vehicle 100v without remotely controlling the vehicle 100v by the server 200.

### YY: Other Traveling Control Examples

(YY1) In the above examples, the external sensor 300 is a camera. However, the external sensor 300 may not be a camera, and may instead be, for example, Light Detection And Ranging (LiDAR). In this case, the result of the detection output from the external sensor 300 may be three dimensional point cloud data indicating the vehicle 100. In this case, the server 200 and the vehicle 100 may acquire the vehicle position information by template matching that uses three dimensional point cloud data obtained as the result of the detection and reference point cloud data prepared in advance.

(YY2) In the traveling control example 1, the server 200 executes processes from the acquisition of the vehicle position information to the generation of a traveling control signal. However, the vehicle 100 may execute at least some of the processes from the acquisition of the vehicle position information to the generation of a traveling control signal. For example, the following forms (1) to (3) may be employed.
(1) The server 200 may acquire vehicle position information, determine a target position to which the vehicle 100 should go next, and generate a route from the current position of the vehicle 100 indicated in the acquired vehicle position information to the target position. The server 200 may generate a route to the target position between the current position and the destination or may generate a route to the destination. The server 200 may transmit the generated route to the vehicle 100. The vehicle 100 may generate a traveling control signal for causing the vehicle 100 to travel along the route received from the server 200, and control the actuators 120 using the generated traveling control signal.
(2) The server 200 may acquire vehicle position information and transmit the acquired vehicle position information to the vehicle 100. The vehicle 100 may determine a target position to which the vehicle 100 should go next, generate a route from the current position of the vehicle 100 indicated in the received vehicle position information to the target position, generate a traveling control signal for causing the vehicle 100 to travel along the generated route, and control the actuators 120 using the generated traveling control signal.
(3) In the above forms (1) and (2), an internal sensor may be mounted on the vehicle 100, and a result of detection output from the internal sensor may be used in at least one of the generation of a route or the generation of a traveling control signal. The internal sensor is a sensor mounted on the vehicle 100. Examples of the internal sensor may include a sensor that detects a motion state of the vehicle 100, a sensor that detects an operation state of each part of the vehicle 100, and a sensor that detects an environment near the vehicle 100. Specifically, examples of the internal sensor may include a camera, LiDAR, a millimeter wave radar, an ultrasonic sensor, a GPS sensor, an acceleration sensor, and a gyro sensor.

For example, in the above form (1), the server 200 may acquire a result of detection by the internal sensor, and reflect the result of the detection by the internal sensor in a route when the route is generated. In the above form (1), the vehicle 100 may acquire a result of detection by the internal sensor, and reflect the result of the detection by the internal sensor in a traveling control signal when the traveling control signal is generated. In the above form (2), the vehicle 100 may acquire a result of detection by the internal sensor, and reflect the result of the detection by the internal sensor in a route when the route is generated. In the above form (2), the vehicle 100 may acquire a result of detection by the internal sensor, and reflect the result of the detection by the internal sensor in a traveling control signal when the traveling control signal is generated.

(YY3) In the traveling control example 2, an internal sensor may be mounted on the vehicle 100v and a result of detection output from the internal sensor may be used in at least one of the generation of a route and the generation of a traveling control signal. For example, the vehicle 100v may acquire a result of detection by the internal sensor, and reflect the result of the detection by the internal sensor in a route when the route is generated. The vehicle 100v may acquire the result of the detection by the internal sensor and reflect the result of the detection by the internal sensor in a traveling control signal when the traveling control signal is generated.

(YY4) In the traveling control example 2, the vehicle 100v acquires vehicle position information using a result of detection by the external sensor 300. However, an internal sensor may be mounted on the vehicle 100v, and the vehicle 100v may acquire vehicle position information using a result of detection by the internal sensor. In this case, the vehicle 100v determines a target position to which the vehicle 100v should go next, and generates a route from the current position of the vehicle 100v indicated in the acquired vehicle position information to the target position. Then the vehicle 100v generates a traveling control signal for the vehicle 100v to travel along the generated route, and controls the actuators 120 using the generated traveling control signal. By this configuration, the vehicle 100v may travel without using any result of the detection by the external sensor 300.

Note that the vehicle 100v may acquire a target arrival time and congestion information from the outside of the vehicle 100v and reflect the target arrival time and the congestion information in at least one of the route and the traveling control signal. Further, all the functional configurations of the system 50v may be provided in the vehicle 100v. That is, the processes implemented by the system 50v in the present disclosure may be implemented by the vehicle 100v alone.

(YY5) In the traveling control example 1, the server 200 automatically generates a traveling control signal to be transmitted to the vehicle 100. However, the server 200 may generate a traveling control signal to be transmitted to the vehicle 100 in accordance with an operation performed by an external operator present outside the vehicle 100. For example, the external operator may operate a controlling apparatus including a display for displaying a captured image output from the external sensor 300, a steering, an accelerator pedal, and a brake pedal for remotely controlling the vehicle 100, and a communication apparatus for communicating with the server 200 by wired communication or wireless communication, and the server 200 may generate a traveling control signal corresponding to the operation performed with regard to the controlling apparatus.

(YY6) In each of the above traveling control examples, the vehicle 100 only needs to have a configuration in which it can move by unmanned driving, and a form of the platform of the vehicle 100 may have, for example, configurations described below. Specifically, the vehicle 100 only needs to include at least the vehicle control apparatus 110 and the actuators 120 in order to perform three functions of "running", "turning", and "stopping" by unmanned driving.

In a case where the vehicle 100 externally acquires information for unmanned driving, the vehicle 100 may further include the communication apparatus 130. That is, the vehicle 100 that can move by unmanned driving may not be provided with at least some of interior components such as a driving seat and a dashboard, at least some of exterior components such as a bumper and a fender, and a body shell.

In this case, the unmounted components such as the body shell may be mounted on the vehicle 100 before the vehicle 100 is shipped from the factory FC, or the unmounted components such as the body shell may be mounted on the vehicle 100 after the vehicle 100 is shipped from the factory FC in a state in which the unmounted components such as the body shell are not mounted on the vehicle 100. The components may be mounted on the vehicle 100 from desired directions thereof, for example, from an upper side, a lower side, a front side, a rear side, a right side, or a left side thereof. They may also be mounted on the vehicle 100 from the same direction or from different directions. Note that regarding the form of the platform, the position may be determined like in the case of the vehicle 100 according to the first embodiment.

(YY7) The vehicle 100 may be manufactured by combining a plurality of modules with one another. The module means a unit formed of a plurality of components grouped in accordance with a part or a function of the vehicle 100. For example, the platform of the vehicle 100 may be manufactured by combining a front module that forms a front part of the platform, a central module that forms a central part of the platform, and a rear module that forms a rear part of the platform with one another.

Note that the number of modules that form the platform is not limited to three, and may instead be two or smaller or four or larger. Further, in addition to or in place of the components that form the platform, components of the vehicle 100 that form the parts thereof other than the platform may be formed in the form of a module. Further, the above various modules may include any exterior components such as a bumper or a grill or any interior components such as seats and a console.

Further, not only the vehicle 100 but also a mobile body of any form may be manufactured by combining a plurality of modules with one another. Each of these modules may be manufactured, for example, by joining a plurality of components by welding, fixtures, or the like, or may be manufactured by integrally molding at least some of the components that form the module as one component by casting. A molding method for integrally molding components as one component, in particular, as a relatively large-sized component, is also referred to as giga casting or mega casting. For example, the above-described front module, central module, and rear module may be manufactured using giga casting.

(YY8) Conveyance of the vehicle 100 using the traveling of the vehicle 100 by unmanned driving is also referred to as "self-propelled conveyance". Further, a configuration for achieving the self-propelled conveyance is referred to as a "vehicle remote control autonomous traveling conveyance system". Further, a production method for producing the vehicles 100 using the self-propelled conveyance is also referred to as "self-propelled production". In the self-propelled production, for example, in the factory FC that manufactures the vehicles 100, a part of the conveyance of the vehicle 100 is achieved by the self-propelled conveyance.

(YY9) In each of the above traveling control examples, some or all of the functions and the processes implemented in the form of software may be implemented in the form of hardware. Further, some or all of the functions and the processes implemented in the form of hardware may be implemented in the form of software. For example, various types of circuits such as an integrated circuit or a discrete circuit may be used as hardware for implementing various types of functions in each of the above embodiments.

Note that, in the present disclosure, some or all of the processes performed in the external sensor 300, the vehicle 100, the server 200, etc. described above can be implemented by causing a Central Processing Unit (CPU) to execute a computer program.

The above-described program includes instructions (or software codes) that, when loaded into a computer, cause the computer to perform one or more of the functions described in the embodiments. The program may be stored in a non-transitory computer readable medium or a tangible storage medium. By way of example, and not a limitation, non-transitory computer readable media or tangible storage media can include a Random-Access Memory (RAM), a Read-Only Memory (ROM), a flash memory, a Solid-State Drive (SSD) or other types of memory technologies, a CD-ROM, a Digital Versatile Disc (DVD), a Blu-ray (Registered Trademark) disc or other types of optical disc storage, a magnetic cassette, a magnetic tape, and a magnetic disk storage or other types of magnetic storage devices. The program may be transmitted on a transitory computer readable medium or a communication medium. By way of example, and not a limitation, transitory computer readable media or communication media can include electrical, optical, acoustical, or other forms of propagated signals.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A vehicle control system comprising:
a plurality of cameras arranged side by side along a longitudinal direction of a work line, the plurality of cameras being configured to capture images of a vehicle (100) traveling on the work line from above; and
a controller (200) configured to control traveling of the vehicle (100) based on the images captured by the plurality of cameras (310a, 310b), wherein
while the vehicle (100) is caused to self-propel in a predetermined direction in the work line, a worker performs work while moving, and
the plurality of cameras comprise pairs of cameras (310a, 310b) arranged side by side along the longitudinal direction of the work line, each of the pairs of cameras (310a, 310b) being configured to capture images of the vehicle (100) from diagonally upward to the left and diagonally upward to the right, respectively.

2. The vehicle control system according to claim 1, wherein the controller (200):
selects an image in which the vehicle (100) is easily recognized from among the images captured by the pair of cameras (310a, 310b); and
controls the traveling of the vehicle (100) based on the selected image.

3. The vehicle control system according to claim 2, wherein the controller (200) selects, when one of left and right doors of the vehicle (100) is open, an image of the vehicle (100) on a side where the door is not open as the image in which the vehicle (100) is easily recognized.

4. The vehicle control system according to claim 1, wherein the controller (200):
selects, when one of the left and the right doors of vehicle is open, an image of the vehicle (100) on a side where the door is not open from among the images captured by the pair of cameras (310a, 310b) based on a door opening signal transmitted from the vehicle (100); and
controls the traveling of the vehicle (100) based on the selected image.

5. The vehicle control system according to any one of claims 1 to 4, wherein
the work line is covered by a lighting booth (400) which is formed in an arch shape so as to straddle the work line in a width direction thereof and extends along the work line, and
the plurality of cameras (310a, 310b) are installed in the lighting booth (400).

6. A vehicle control method comprising:
capturing images of a vehicle traveling on a work line from above by a plurality of cameras arranged side by side along a longitudinal direction of the work line; and
controlling, by a controller, traveling of the vehicle (100) based on the images captured by the plurality of cameras, wherein
while the vehicle (100) is caused to self-propel in a predetermined direction in the work line, a worker performs work while moving, and
the plurality of cameras comprise pairs of cameras (310a, 310b) arranged side by side along the longitudinal direction of the work line, each of the pairs of cameras (310a, 310b) being configured to capture images of the vehicle (100) from diagonally upward to the left and diagonally upward to the right, respectively.

7. The vehicle control method according to claim 6, wherein the controller (200):
selects an image in which the vehicle (100) is easily recognized from among the images captured by the pair of cameras (310a, 310b); and
controls the traveling of the vehicle (100) based on the selected image.

8. The vehicle control method according to claim 7, wherein the controller (200) selects, when one of left and right doors of the vehicle (100) is open, an image of the vehicle (100) on a side where the door is not open as the image in which the vehicle (100) is easily recognized.

9. The vehicle control method according to claim 6, wherein the controller (200):
selects, when one of the left and the right doors of vehicle is open, an image of the vehicle (100) on a side where the door is not open from among the images captured by the pair of cameras (310a, 310b) based on a door opening signal transmitted from the vehicle (100); and
controls the traveling of the vehicle (100) based on the selected image.

10. The vehicle control method according to any one of claims 6 to 9, wherein
the work line is covered by a lighting booth (400) which is formed in an arch shape so as to straddle the work line in a width direction thereof and extends along the work line, and
the plurality of cameras (310a, 310b) are installed in the lighting booth (400).
